# EUROPEAN PATENT APPLICATION

(11) **EP 4 005 684 A1**
(43) Date of publication of application: **01.06.2022**
(21) Application number: 20844651.8
(22) Date of filing: 22.07.2020
(51) Int. Cl.: B05B 9/04, B64C 39/02, B64D 1/16, B64D 1/18, B64D 47/08, F41G 1/46, B05B 17/00, E04G 23/02

(54) **UNMANNED AERIAL VEHICLE**

(30) Priority: 23.07.2019 JP 2019135208; 08.11.2019 JP 2019203248
(71) Applicant: Toyo Seikan Co., Ltd., Tokyo 141-8640 (JP)
(72) Inventor: KOMINAMI Atsushi, Yokohama-shi, Kanagawa 230-0001 (JP); ARAKI Souji, Yokohama-shi, Kanagawa 230-0001 (JP)
(74) Representative: Pfenning, Meinig & Partner mbB
(86) International application number: PCT/JP2020/028505
(87) International publication number: WO 2021/015251

(57) **Abstract**

Provided is an unmanned aerial vehicle capable of carrying an aerosol container, comprising: a discharge unit with a discharge outlet for discharging contents of the aerosol container from the discharge outlet; a camera capable of capturing footage of the discharge range of the contents; an information acquiring unit for acquiring predetermined information; and an estimation unit for estimating an estimated landing position of the contents based on information obtained by the information acquiring unit. The unmanned aerial vehicle may include a camera capable of capturing footage of a discharge range of the contents; and a coupling unit that is couple with the camera and is a posture control mechanism with rotational degrees of freedom to change a posture.

## Description

### BACKGROUND

### 1. TECHNICAL FIELD

The present invention relates to an unmanned aerial vehicle.

### 2. RELATED ART

Conventionally, an unmanned aerial vehicle comprising a fluid injection nozzle is known (for example, Patent Document 1)

Patent Document 1: Japanese Patent Application Publication No. 2019-18589.

### 3. TECHNICAL PROBLEM

A conventional unmanned aerial vehicle has difficulty in accurately landing a jet of fluid on an object.

### GENERAL DISCLOSURE

In a first aspect of the present invention, provided is an unmanned aerial vehicle capable of carrying an aerosol container is provided, comprising: a discharge unit with a discharge outlet for discharging contents of the aerosol container from the discharge outlet; a camera capable of capturing footage of the discharge range of the contents; and an information acquiring unit for acquiring predetermined information; and an estimation unit for estimating an estimated landing position of the contents based on information obtained by the information acquiring unit.

The camera may be supported by a posture control mechanism with rotational degrees of freedom to make the posture variable.

The unmanned aerial vehicle may include a communication unit for communicating with a monitor for confirming footage under capturing by the camera. The communication unit may send the estimated landing position estimated by the estimation unit.

The unmanned aerial vehicle may be include an aiming unit that defines the target landing position of the contents, and a discharge direction control unit that controls the direction of the discharge outlet so as to reduce the difference between the target landing position and the estimated landing position.

The discharge direction control unit may support the posture control mechanism with rotational degrees of freedom to change the posture.

The discharge direction control unit may control the posture of the unmanned aerial vehicle.

The estimation unit may include a correction unit for correcting the estimated landing position estimated by the estimation unit.

The correction unit may provide a correction amount according to the diffusion amount of the contents.

The information acquiring unit may acquire the landing position where the contents landed. The correction unit may provide a correction amount according to a difference between the landing position and the estimated landing position.

The information acquiring unit may acquire the locus of the discharged contents. The correction unit may provide a correction amount according to the locus of the contents.

The information acquiring unit may include a range sensor for acquiring the distance between the discharge outlet and the target landing position. The correction unit may provide a correction amount according to the distance.

The information acquiring unit may include a shape acquisition unit for acquiring a shape of the object to which the contents are discharged. The correction unit may provide the correction amount according to the shape.

The information acquiring unit may include a wind power sensor for detecting the wind direction and the wind speed. The correction unit may provide the correction amount based on the detection result of the wind power sensor.

The unmanned aerial vehicle may include a flight control unit for controlling the flight of the unmanned aerial vehicle. The correction unit may provide the correction amount based on the output value of the airspeed and the ground speed calculated by the flight control unit.

The unmanned aerial vehicle may include a discharge control unit that evaluates the risk about self-contamination due to the discharge of contents according to the information acquired by the information acquiring unit, and controls the warning or prohibition of discharge.

The discharge control unit may send out the warning information according to the warning or prohibition of the discharge.

The discharge unit may include a nozzle for discharging the contents. The discharge control unit may perform control according to the posture of the nozzle.

The discharge control unit may perform control according to the distance between the discharge outlet and the target landing position.

The discharge control unit may perform the control based on the output values of the airspeed and the ground speed of the unmanned aerial vehicle.

The discharge control unit may perform control according to at least one of the wind direction and the wind speed.

The estimation unit may estimate the estimated landing position using the trajectory data of the contents.

The unmanned aerial vehicle may include a housing component for holding the aerosol container.

The summary clause does not necessarily describe all necessary features of the embodiments of the present invention. The present invention may also be a sub-combination of the features described above.

### BRIEF DESCRIPTION OF THE DRAWINGS

Fig. 1A illustrates one example of a front view of an unmanned aerial vehicle 100.
Fig. 1B illustrates one example of a left side view of the unmanned aerial vehicle 100 according to Fig. 1A.
Fig. 2A illustrates another example of the front view of the unmanned aerial vehicle 100.
Fig. 2B illustrates a left side view of the unmanned aerial vehicle 100 according to Fig. 2A.
Fig. 3 illustrates one example of a configuration of a container holding unit 40.
Fig. 4 illustrates one example of a maneuvering system 300 of the unmanned aerial vehicle 100.
Fig. 5 illustrates one example of a functional block diagram of the unmanned aerial vehicle 100.
Fig. 6A illustrates one example of locus and diffusion range of discharged contents.
Fig. 6B illustrates a horizontal diffusion range of discharged contents.
Fig. 7A illustrates one example of the unmanned aerial vehicle 100 that is discharging contents.
Fig. 7B illustrates one example of a display screen of a display unit 210.
Fig. 7C illustrates one example of a display screen of the display unit 210.
Fig. 8A illustrates one example of a display screen of the display unit 210.
Fig.8B illustrates one example of a display screen of the display unit 210.
Fig. 9A illustrates one example of the unmanned aerial vehicle 100 that is discharging contents.
Fig. 9B illustrates one example of a discharge control method depending on operations of the display unit 210.
Fig. 9C illustrates one example of the posture controlled unmanned aerial vehicle 100.
Fig. 9D illustrates one example of a display screen of the display unit 210 after posture control.
Fig. 10A illustrates one example of the unmanned aerial vehicle 100 that is discharging contents.
Fig. 10B illustrates one example of the display unit 210 corresponding to the unmanned aerial vehicle 100 shown in Fig. 10A.
Fig. 10C illustrates one example of the unmanned aerial vehicle 100 that is discharging contents.
Fig. 11A illustrates one example of the unmanned aerial vehicle 100 that is discharging contents.
Fig. 11B illustrates one example of a correction method by the unmanned aerial vehicle 100.
Fig. 11C illustrates one example of the unmanned aerial vehicle 100 that is discharging contents after correction.
Fig. 12A illustrates one example of a discharge control method based on a locus 152.
Fig. 12B illustrates one example of discharge after correction using the locus 152.
Fig. 13A illustrates one example of a configuration of the unmanned aerial vehicle 100.
Fig. 13B illustrates one example of a flight control method of the unmanned aerial vehicle 100.
Fig. 13C illustrates one example of the flight control method of the unmanned aerial vehicle 100.
Fig. 14A illustrates one example of a block diagram showing a configuration of the unmanned aerial vehicle 100.
Fig. 14B illustrates one example of a possible state of self-contamination of the unmanned aerial vehicle 100.
Fig. 14C illustrates a figure for describing one example of a control method of a discharge control unit 90.
Fig. 14D illustrates a figure for describing one example of a control method of the discharge control unit 90.
Fig. 14E illustrates one example of a display unit 210 when discharge is prohibited.

### DESCRIPTION OF EXEMPLARY EMBODIMENTS

Hereinafter, the present invention will be described through embodiments of the invention, but the following embodiments do not limit the invention according to the claims. In addition, not all the combinations of the features explained in the embodiments are necessarily essential for the means for solving the problems of the inventions.

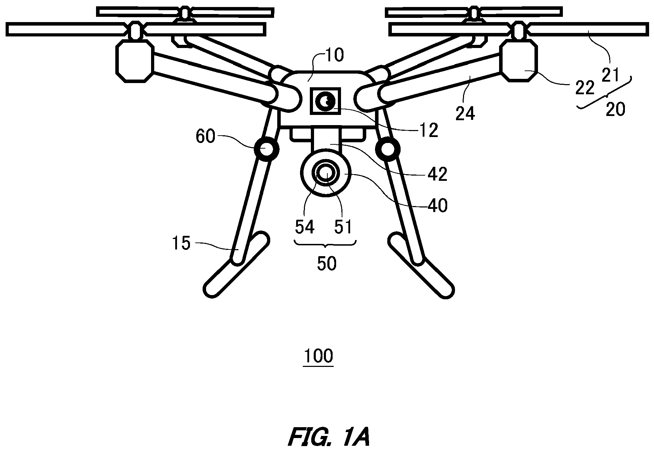

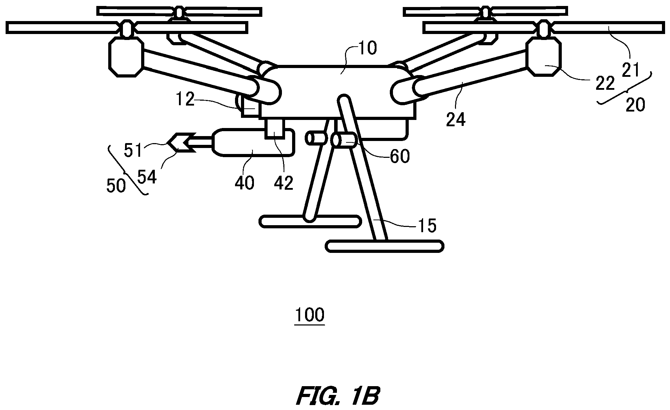

Fig. 1A illustrates one example of a front view of an unmanned aerial vehicle 100. Fig. 1B illustrates one example of a left side view of the unmanned aerial vehicle 100 according to Fig. 1A.

The unmanned aerial vehicle 100 is a flight vehicle that flies in the air. The unmanned aerial vehicle 100 in this example includes a body portion 10, a propulsion unit 20, a container holding unit 40, a discharge unit 50 and an information acquiring unit 60. Note that in the specification, in the body portion 10, the surface with the fixed camera 12 is referred to as the front of the unmanned aerial vehicle 100, but the flight direction is not limited to the front direction.

The body portion 10 stores various types of control circuits, power sources and so on of the unmanned aerial vehicle 100. Also, the body portion 10 may function as a structure for coupling configurations of the unmanned aerial vehicle 100. The body portion 10 of this example is coupled to the propulsion unit 20. The body portion 10 of this example includes a fixed camera 12.

The fixed camera 12 is provided in a side surface of the body portion 10. The fixed camera 12 captures footage of the front surface of the unmanned aerial vehicle 100. In one example, footage captured by the fixed camera 12 is sent to a terminal device of the unmanned aerial vehicle 100. An operator of the unmanned aerial vehicle 100 may operate the unmanned aerial vehicle 100 based on the captured footage by the fixed camera 12. Also, the operator of the unmanned aerial vehicle 100 may also directly maneuver the unmanned aerial vehicle 100 by watching it. Note that the fixed camera 12 of this example captures a discharge range of the contents.

The propulsion unit 20 propels the unmanned aerial vehicle 100. The propulsion unit 20 includes a rotary wing 21 and a rotation drive unit 22. The unmanned aerial vehicle 100 in this example includes four propulsion units 20. The propulsion unit 20 is attached to the body portion 10 via the arm portion 24. Note that the unmanned aerial vehicle 100 may be a flight vehicle comprising a fixed wing.

The propulsion unit 20 obtains a propulsive force by rotating the rotary wing 21. Four rotary wings 21 are provided around the body portion 10, but the arrangement method of the rotary wing 21 is not limited to this example. The rotary wing 21 is provided at an edge of the arm portion 24 via the rotation drive unit 22.

The rotation drive unit 22 has a power source such as a motor, by which the rotary wing 21 is driven. The rotation drive unit 22 may include a braking mechanism of the rotary wing 21. The rotary wing 21 and the rotation drive unit 22 may be attached directly to the body portion 10 with the arm portion 24 omitted.

The arm portion 24 is provided extending radially from the body portion 10. The unmanned aerial vehicle 100 of this example includes four arm portions 24 provided corresponding to four of the propulsion units 20. The arm portion 24 may be fixed or movable. The arm portion 24 may have another configuration such as a camera fixed thereon.

The container holding unit 40 holds a container 150, which is described below, for holding contents. The container holding unit 40 is coupled with the body portion 10 via the coupling unit 42. The container holding unit 40 may be coupled with a member other than the body portion 10 such as the arm portion 24 or a leg portion 15. In one example, the container holding unit 40 is a cylindrical sleeve for housing the container 150.

The material for the container holding unit 40 is not particularly limited only if the material can hold the shape of the housing unit for housing the container 150. For example, the material for the container holding unit 40 includes a metal such as aluminum, plastics, or highly strong and lightweight materials such as carbon fiber. Also, the material for the container holding unit 40 is not limited to hard materials, but may also include soft materials, for example, rubber materials such as silicone rubber or urethane foam. Note that the container holding unit 40 may include a heating mechanism for heating or keeping the temperature of the container 150.

The coupling unit 42 couples the body portion 10 and the container holding unit 40. The coupling unit 42 may be fixed or movable. The coupling unit 42 may be a gimbal for controlling the position of the container holding unit 40 in three axial directions. In one example, the coupling unit 42 adjusts the discharge direction of the discharge unit 50 by moving the position of the container holding unit 40. Note that by unifying the standard of the coupling unit 42, it is possible to replace it with any container holding unit 40 that matches the container 150. In this way, it is possible to correspond to a container 150 of a different size or type.

The discharge unit 50 is connected to the container 150, and discharges contents of the container 150. The contents may be any of liquid, gas or solids. The contents may be in any state of powder, granular or gel or the like. The discharge unit 50 includes a nozzle 54 for discharging the contents. The discharge unit 50 includes a discharge outlet 51 for discharging the contents of the container 150.

The information acquiring unit 60 acquires predetermined information. The information acquiring unit 60 of this example acquires necessary information for controlling the discharge from the discharge unit 50. For example, the information acquiring unit 60 includes a range sensor, a shape acquisition unit or a wind power sensor. The information acquiring unit 60 of this example is provided in each of the two leg portions 15. The information acquiring unit 60 may be attached to another member such as the arm portion 24 or the like, or may be built in the body portion 10.

The leg portion 15 is coupled with the body portion 10, and holds the posture of the unmanned aerial vehicle 100 during landing. The leg portion 15 holds the posture of the unmanned aerial vehicle 100 with the propulsion unit 20 stopped. The unmanned aerial vehicle 100 of this example includes two leg portions 15. The leg portion 15 may have a container holding unit 40 attached thereto.

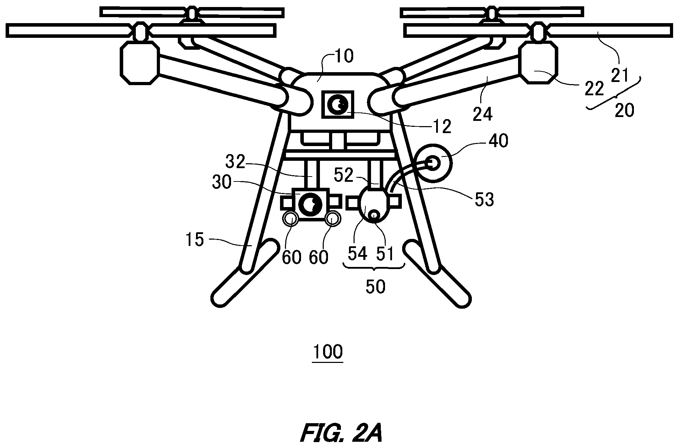

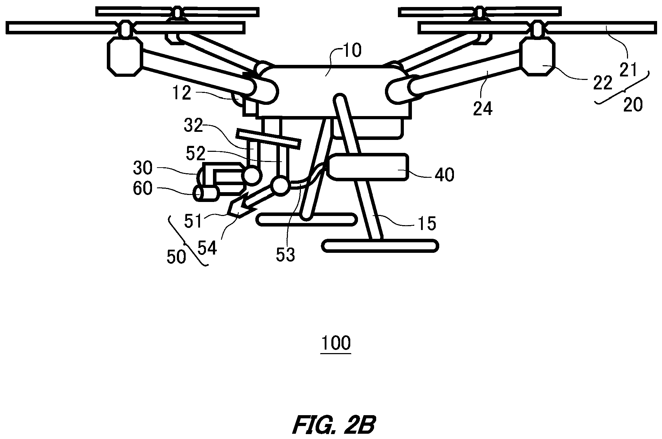

Fig. 2A illustrates another example of the front view of the unmanned aerial vehicle 100. Fig. 2B illustrates a left side view of the unmanned aerial vehicle 100 according to Fig. 2A. In this example, the embodiments of the unmanned aerial vehicle 100 in Fig. 1A is different from that in Fig. 1B in the point of including a movable camera 30. In this example, the different point between the embodiments of Fig. 1A and Fig. 1B is to be particularly described.

The movable camera 30 captures footage of the periphery of the unmanned aerial vehicle 100. The movable camera 30 of this example is provided under the body portion 10. In one example, "under" refers to a side opposite to the side on which the rotary wing 21 is provided relative to the body portion 10. The movable camera 30 captures footage of a region different from that captured by the fixed camera 12 provided in the body portion 10. For example, the movable camera 30 acquires footage of a region narrower than that captured by the fixed camera 12 for controlling the discharge from the discharge unit 50. Also, the movable camera 30 may capture the footage in the discharge direction of the discharge unit 50 when the fixed camera 12 captures the advancing direction. Note that the movable camera 30 is one example of a camera that can capture footage of the contents discharge range.

The operations by the operator become easier by the unmanned aerial vehicle 100 of this example with the fixed camera 12 for operation and the movable camera 30 for discharge control. The confusion of the operator can be prevented since there is no necessary switching between the operation screen for operation and the operation screen for discharge control. Also, it is possible to easily grasp the periphery of the unmanned aerial vehicle 100 during discharge control.

The coupling unit 32 couples the body portion 10 with the movable camera 30. The coupling unit 32 may be fixed or movable. In one example, the coupling unit 32 is a posture control mechanism with rotational degrees of freedom for turning the posture of the movable camera 30 variable. The coupling unit 32 may be a gimbal for controlling the position of the movable camera 30 in three axial directions. The coupling unit 32 may control the orientation of the movable camera 30 matching the discharge direction of the discharge unit 50.

The coupling unit 52 couples the body portion 10 and the discharge unit 50. The coupling unit 52 may be fixed or movable. The coupling unit 52 may be a gimbal for controlling the position of the discharge unit 50 in three axial directions. In one example, the coupling unit 52 adjusts the discharge direction by moving the position of the discharge unit 50. In this example, the container holding unit 40 is fixed on the leg portion 15.

The extending portion 53 is provided extending from the container 150 to the discharge unit 50 of the container holding unit 40. In this way, the extending portion 53 can arrange the discharge unit 50 at any position away from the container holding unit 40. Accordingly, the freedom of layout of the unmanned aerial vehicle 100 can be improved. Also, the remote operation of the discharge direction becomes easier by attaching the discharge unit 50 to the gimbal.

The information acquiring unit 60 is attached to the movable camera 30. In this example, two information acquiring units 60 are attached to the movable camera 30. The information acquiring unit 60 may be attached to the leg portion 15, similar to Fig. 1A and Fig. 1B. Since the information acquiring unit 60 is attached to the movable camera 30, which is provided near the discharge unit 50, it is possible to acquire information from a position closer to the discharge unit 50.

Note that the unmanned aerial vehicle 100 may include a plurality of container holding units 40. The plurality of container holding units 40 may include containers 150 of the same type, or may each have containers 150 of different types.

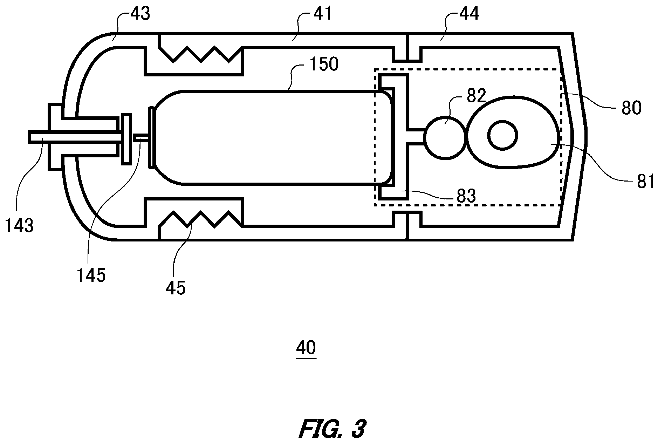

Fig. 3 illustrates one example of the configuration of the container holding unit 40. Fig. 3 illustrates a cross sectional view of the container holding unit 40. The container holding unit 40 holds the container 150. The container holding unit 40 in this example includes a body 41, a first end cover unit 43 and a second end cover unit 44. The body 41, the first end cover unit 43 and the second end cover unit 44 configure a housing component for holding the container 150. Also, the container holding unit 40 includes a discharge drive unit 80 for controlling discharge from the container 150.

The container 150 may be an aerosol container that discharges contents filled in interior by gas pressure. For example, the container 150 spews out the contents by the gas pressure of the liquefied gas or the compressed gas filled in interior. The container 150 of this example is an aerosol container made of metal. The container 150 may be a plastic container with pressure resistance. The container 150 is mounted in a state of being housed by the container holding unit 40. The container 150 may be a resin tank, not limited to an aerosol container.

Note that liquefied gases such as hydrocarbon (liquefied petroleum gas) (LPG), dimethyl ether (DME), and fluorinated hydrocarbons (HFO-1234ze), and compressed gases such as carbon dioxide (CO₂), nitrogen (N₂), and nitrous oxide (N₂O) may be used as propellants.

The body 41 has a shape of cylindrical with a larger diameter than the container 150. The body 41 of this example is sandwiched between the first end cover unit 43 and the second end cover unit 44.

The first end cover unit 43 covers one end of the body 41. The first end cover unit 43 of this example covers one end of the injection side of the container 150. The first end cover unit 43 is removably screwed and fixed to the body 41 via the screw unit 45. The first end cover unit 43 of this example has a dome-shaped cover body. The first end cover unit 43 is reduced in diameter so that it gradually becomes smaller toward the edge in consideration of aerodynamic characteristics. The first end cover unit 43 has a conical or dome-shaped curved surface with a rounded edge. This shape with good aerodynamic characteristics can reduce the effect of crosswinds and stabilize the flight.

The second end cover unit 44 covers the end other than the end covered by the first end cover unit 43 in the body 41. The second end cover unit 44 in this example covers the end on the side opposite to the injection side of the container 150. The second end cover unit 44 is configured integrately with the body 41. Also, the second end cover unit 44 may be provided removable from the body 41.

The discharge drive unit 80 discharges contents from the container 150. The discharge drive unit 80 is housed in the second end cover unit 44, which is located on the bottom side of the container 150. The second end cover unit 44 functions as a housing of the discharge drive unit 80. The discharge drive unit 80 includes a cam 81, a cam follower 82, and a movable plate 83. Since the discharge drive unit 80 is provided in the container holding unit 40, it is not necessary to exchange the discharge drive unit 80 during exchanging the container 150.

The cam 81 is driven by a drive source to rotate. In one example, a motor is used as a drive source. The cam 81 has a structure with a different distance from the rotational center to the outer circumference. Note that in the illustrated example, the shape of the cam 81 has been exaggerated. The cam 81 is in contact with the cam follower 82 in the outer circumference.

The cam follower 82 is provided between the cam 81 and the movable plate 83. The cam follower 82 is connected to the cam 81 and the movable plate 83, and the rotational motion of the cam 81 is transmitted to the movable plate 83 as a linear motion.

The movable plate 83 is provided in contact with the bottom surface of the container 150, and controls the open and close of the valve of the container 150. The movable plate 83 moves forward and backward by the cam follower 82. For example, when the distance between the rotational center of the cam 81 and the contact region of the cam 81 with the cam follower 82 abutting thereon is short, the movable plate 83 moves backward with respect to the container 150, and closes the valve of the container 150. On the other hand, when the distance between the rotational center of the cam 81 and the contact region of the cam 81 with the cam follower 82 abutting thereon is long, the movable plate 83 moves forward with respect to the container 150, and open the valve of the container 150.

Note that the discharge drive unit 80 has a configuration for converting the rotational motion of the motor into a linear motion by the cam mechanism, it is not limited to the cam mechanism. For example, the mechanism of the discharge drive unit 80 may be a mechanism for converting the rotational motion of the motor into a linear motion, such as a screw feed mechanism or rack and pinion. Also, the drive source may include a linear motor for linear drive, or an electromagnetic solenoid or the like, rather than a rotary motor.

The stem 145 is provided in the container 150. When the stem 145 is pressed by the actuator 143, the contents are discharged from the container 150. The actuator 143 has a flow channel according to the discharge direction and the discharge form. In one example, the actuator 143 discharges the contents in an atomized form.

Since the container 150 of this example is an aerosol container, it can be easy to exchange only by mounting a new container 150 even when the container 150 is empty. Also, the contents are less likely to adhere to the human body and are safer to exchange.

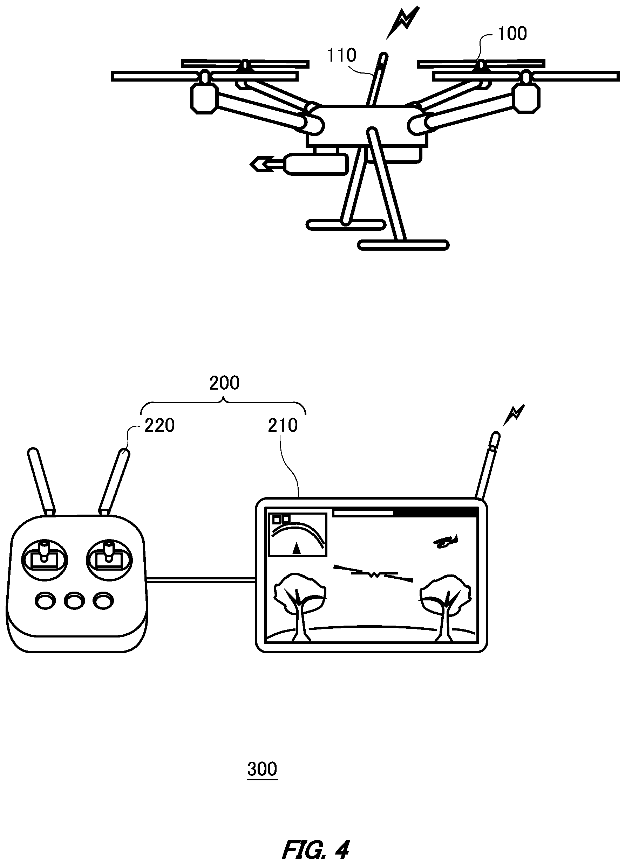

Fig. 4 illustrates one example of a maneuvering system 300 of the unmanned aerial vehicle 100. The maneuvering system 300 of this example includes an unmanned aerial vehicle 100 and a terminal device 200. The terminal device 200 includes a display unit 210 and a controller 220.

The display unit 210 displays the footage captured by the camera mounted on the unmanned aerial vehicle 100. The display unit 210 may display the footage captured by each of the fixed camera 12 and the movable camera 30. For example, the display unit 210 displays the footage from the fixed camera 12 and the movable camera 30 in a split screen. The display unit 210 may directly communicate with the unmanned aerial vehicle 100, or may indirectly communicate with the unmanned aerial vehicle 100 via the controller 220. The display unit 210 may be connected to the external server.

The controller 220 maneuvers the unmanned aerial vehicle 100 by the operations of the user. The controller 220 may instruct the discharge of the contents of the discharge unit 50 in addition to the flight of the unmanned aerial vehicle 100. The controller 220 may be connected to the display unit 210 in a wired or wireless manner. A plurality of controllers 220 may be provided and used separately for operating the unmanned aerial vehicle 100 and for controlling the discharge of the discharge unit 50.

The communication unit 110 is provided in the unmanned aerial vehicle 100. The communication unit 110 communicates with the display unit 210 or the controller 220. The communication unit 110 has an antenna for communication. The communication unit 110 of this example may be attached on the outer surface of the body portion 10, or may be built in the body portion 10.

Note that the user of this example maneuvers the unmanned aerial vehicle 100 manually using the terminal device 200. However, the user may also maneuver it automatically by programs rather than manually. Also, the user may maneuver the unmanned aerial vehicle 100 directly by watching it without using a screen displayed on the display unit 210. Also, the operation of the unmanned aerial vehicle 100 may be automatically controlled and the discharge by the discharge unit 50 may be manually operated.

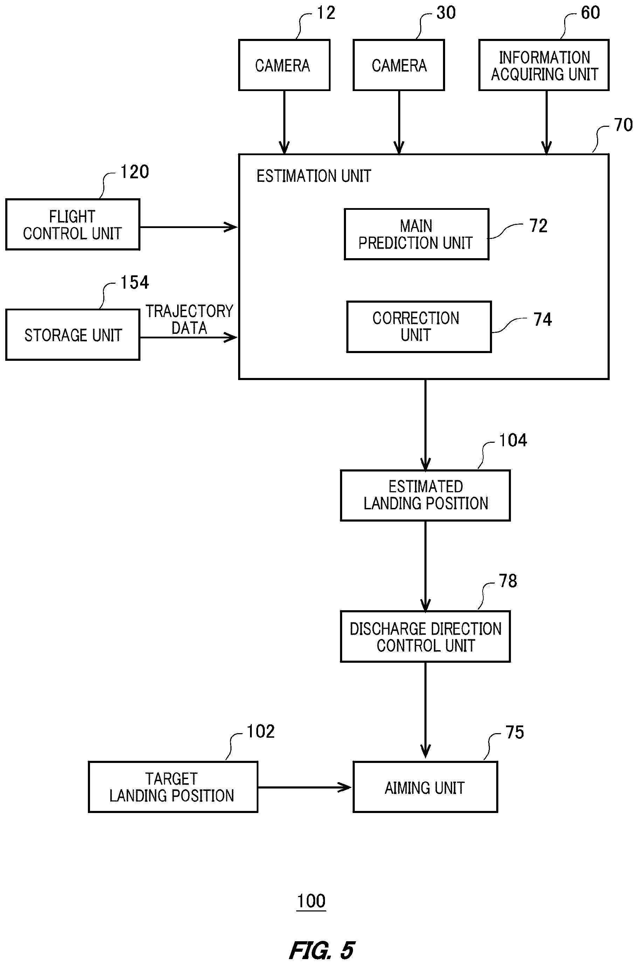

Fig. 5 illustrates one example of a functional block diagram of the unmanned aerial vehicle 100. The unmanned aerial vehicle 100 of this example includes a fixed camera 12, a movable camera 30, an information acquiring unit 60, an estimation unit 70, an aiming unit 75, and a discharge direction control unit 78. Also, the unmanned aerial vehicle 100 may include a flight control unit 120 and a storage unit 154. The estimation unit 70 of this example has a main prediction unit 72 and a correction unit 74.

The aiming unit 75 determines the target landing position 102 of the contents, and aims the discharge unit 50 at the discharge target 602. Details about the discharge target 602 are described below. For example, the aiming unit 75 directs the discharge direction to the discharge target 602 by controlling the posture of the nozzle 54. Also, the aiming unit 75 may also aim at the discharge target 602 according to the estimated landing position 104 when the estimation unit 70 has generated an estimated landing position 104.

The target landing position 102 is a target position for the landing of the contents. The target landing position 102 may be operated matching the discharge target 602. The target landing position 102 may be automatically operated, or may be manually operated.

The information from the information acquiring unit 60 is input into the estimation unit 70. The estimation unit 70 estimates the estimated landing position 104 of the contents based on the information obtained by the information acquiring unit 60. The estimation unit 70 estimates the landing position of the contents discharged from the discharge unit 50, and generates the estimated landing position 104. The images captured by the fixed camera 12 or the movable camera 30 may be input to the estimation unit 70. Note that landing refers to that the discharged contents from the discharge unit 50 have arrived to the object 600. Details about the object 600 are described below. The estimation unit 70 of this example includes a main prediction unit 72 and a correction unit 74.

The estimated landing position 104 is a landing position estimated by the estimation unit 70. The estimated landing position 104 may be estimated based on information acquire by the information acquiring unit 60. For example, the estimated landing position 104 is a landing position estimated taking external factors such as actual environment into account, when the discharge unit 50 is controlled aiming at the target landing position 102. The estimated landing position 104 may be sent to the display unit 210 by the communication unit 110.

The main prediction unit 72 generates the estimated landing position 104 based on the information input to the estimation unit 70. In one example, the main prediction unit 72 acquires the trajectory data of the discharge unit 50, and generates the estimated landing position 104 according to the mounted container 150.

The trajectory data is data of the discharged contents from the container 150. For example, the trajectory data includes discharge speed, locus of the discharged contents and the diffusion range. The trajectory data may be data in an ideal state without considering outside environment. The trajectory data may be input in advance into the estimation unit 70, or may be read from the container 150, or may be acquired from the server. The trajectory data may be stored by the storage unit 154, or may be input from the outside.

For example, the estimation unit 70 estimates the estimated landing position 104 using the trajectory data. In one example, the estimation unit 70 estimates the estimated landing position 104 based on the trajectory data before the actual discharge. Also, the estimation unit 70 may estimate the estimated landing position 104 based on the actually discharged trajectory data after the actual discharge.

The correction unit 74 corrects the estimated landing position 104 estimated by the estimation unit 70. The correction unit 74 of this example improves the accuracy of the estimated landing position 104 by correcting the estimated landing position 104 generated by the main prediction unit 72. The correction unit 74 generates the correcting value according to the information from the information acquiring unit 60, and corrects the estimated landing position 104 based on the correcting value. For example, the correction unit 74 provides a correction amount according to the contents diffusion amount, the wind power sensor detection result, or the distance from the object 600 or the like. The correction unit 74 may also provide the correction amount according to the shape of the object 600 acquired by the shape acquisition unit. The specific correction method of the correction unit 74 is described below.

The flight control unit 120 controls the flight of the unmanned aerial vehicle 100. The flight control unit 120 is a flight controller in one example. For example, the flight control unit 120 controls the ground speed, airspeed and the altitude of the unmanned aerial vehicle 100. The flight control unit 120 sends the data used in flight control to the estimation unit 70.

The storage unit 154 stores the information such as trajectory data and sends the stored information to the estimation unit 70. The storage unit 154 may store the trajectory data during actual discharge. By having the storage unit 154 stored information about the container 150, it is possible to achieve prediction of the estimated landing position 104 using the previous trajectory data even after the container 150 is exchanged.

The discharge direction control unit 78 controls the discharge direction of the discharge unit 50. The discharge direction control unit 78 may control the position of the discharge unit 50, or may control the posture of the unmanned aerial vehicle 100, or may control the discharge direction by combining these together. In one example, the discharge direction control unit 78 controls the orientation of the discharge outlet 51 according to the remaining amount of the container 150. The discharge direction control unit 78 of this example controls the orientation of the discharge outlet 51 to reduce the difference between the target landing position 102 and the estimated landing position 104.

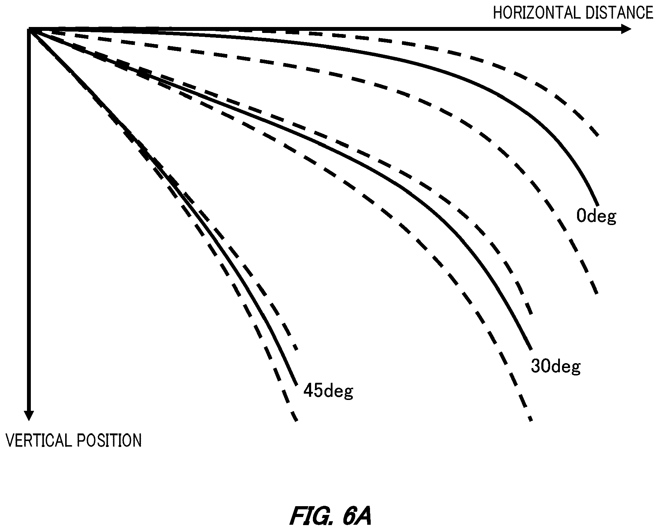

Fig. 6A illustrates one example of the locus and the diffusion range of the discharged contents. The vertical axis illustrates the vertical position from the discharge outlet 51, and the horizontal axis illustrates the horizontal distance from the discharge outlet 51. The solid lines illustrate the injection track of the discharged contents. The dashed lines illustrate the diffusion range of the discharged contents. The intersection point of the vertical axis and the horizontal axis is the position of the discharge outlet 51, and in this example, the orientation of the discharge outlet 51 is changed.

The contents are discharged at a predetermined relative horizontal angle with respect to the horizontal plane of the discharge outlet 51. The relative horizontal angle illustrates an angle of the discharge direction with respect to the horizontal plane. In this example, the contents are discharged at relative horizontal angles of 0°, 30°, and 45°, respectively. When the relative horizontal angle is 0°, it is discharged horizontally, and when the angle is 90°, it is discharged vertically downward. If the contents are discharged at an angle close to horizontal, the discharge distance becomes longer, but the diffusion range becomes larger. The closer the relative horizontal angle is to 90°, the harder it is to diffuse and the narrower the diffusion range becomes, but the shorter the horizontal distance becomes.

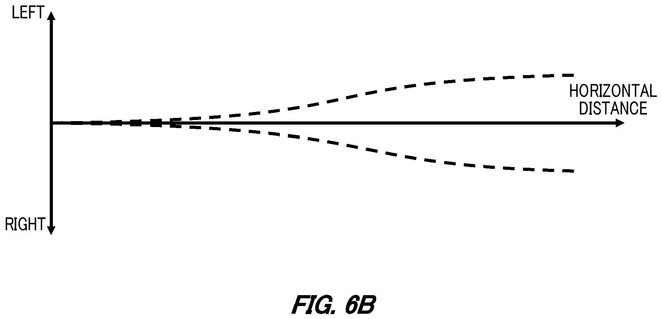

Fig. 6B illustrates the horizontal diffusion range of the discharged contents. This example shows the horizontal diffusion range when the contents are discharged at a relative horizontal angle of 0°. The discharged contents diffuse left and right with respect to the horizontal distance. The solid lines illustrate the injection track of the discharged contents. The dashed lines illustrate the diffusion range of the discharged contents. The diffusion range of this example illustrates the range where the contents diffuse to the left and right with respect to the discharge direction. Although the diffusion range is narrow immediately after discharge, the diffusion range is gradually expanding. Since the diffusion range varies depending on the container 150 or its contents, the diffusion range may be acquired for each container 150.

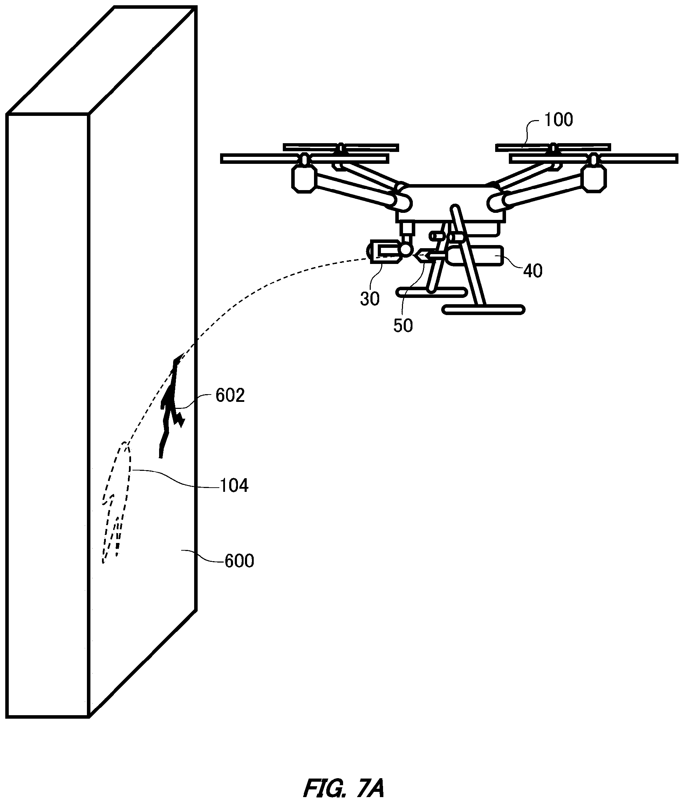

Fig. 7A illustrates one example of the unmanned aerial vehicle 100 for discharging the contents. The unmanned aerial vehicle 100 of this example discharges the contents from the discharge unit 50 aiming at the discharge target 602 of the object 600. The unmanned aerial vehicle 100 includes a movable camera 30 that is movable and a discharge unit 50 that is fixed.

The object 600 is the object that the unmanned aerial vehicle 100 discharges the contents to. The object 600 of this example is pillar, but it is not limited to this. The object 600 may be a building, a wall, a tunnel, a telephone pole, a signboard, a bridge, a tree and so on. The discharge target 602 is a position on the object 600 where the contents are discharged. The discharge target 602 of this example is the defective part of the object 600, which is to be repaired by applying the contents by the unmanned aerial vehicle 100. The unmanned aerial vehicle 100 in this example has an estimated landing position 104 that is offset to the left of the discharge target 602, so the posture of the vehicle is controlled to align with the discharge target 602.

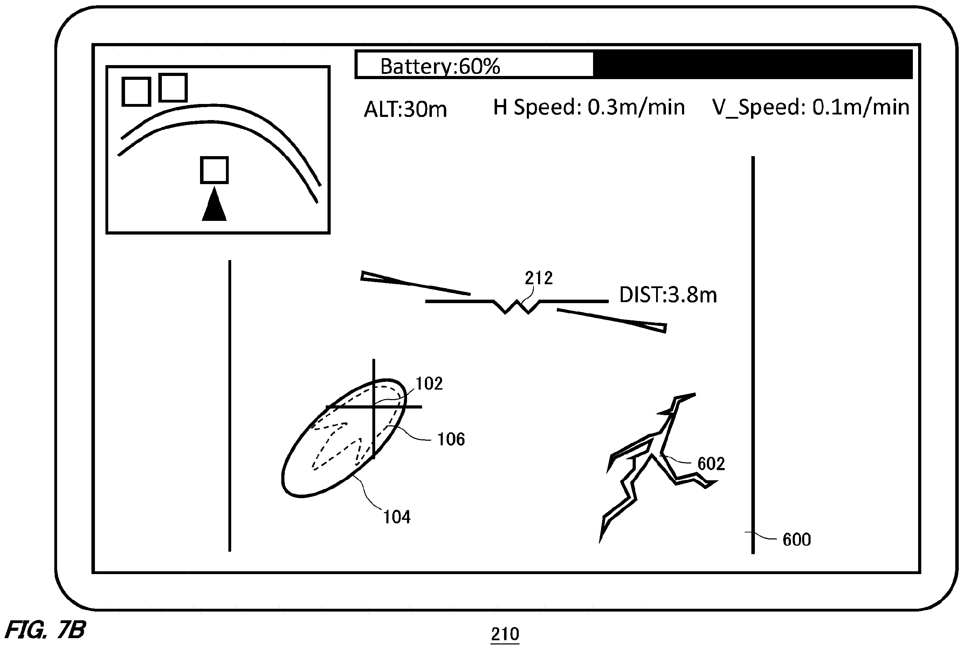

Fig. 7B illustrates one example of a display screen of the display unit 210. The display unit 210 of this example displays the operation screen during operation of the unmanned aerial vehicle 100 as shown in Fig. 7A.

The display unit 210 is a monitor for confirming anytime the footage under capturing by the camera of the unmanned aerial vehicle 100. The estimated landing position 104 estimated by the estimation unit 70 is displayed in a visible state on the footage. The center position 212 indicates the center of the display unit 210. The center position 212 is a center position of the movable camera 30 in one example.

The target landing position 102 is illustrated by a cross center. The discharge unit 50 discharges the contents aiming at the target landing position 102. The estimated landing position 104 is drawn as an ellipse to account for the diffusion of the contents.

The landing position 106 is a position where the actually discharged contents lands on the object 600. The landing position 106 of this example is illustrated by dashed lines, indicating a position where the contents land when temporarily discharged. The landing position 106 of this example falls within the ellipse of the estimated landing position 104.

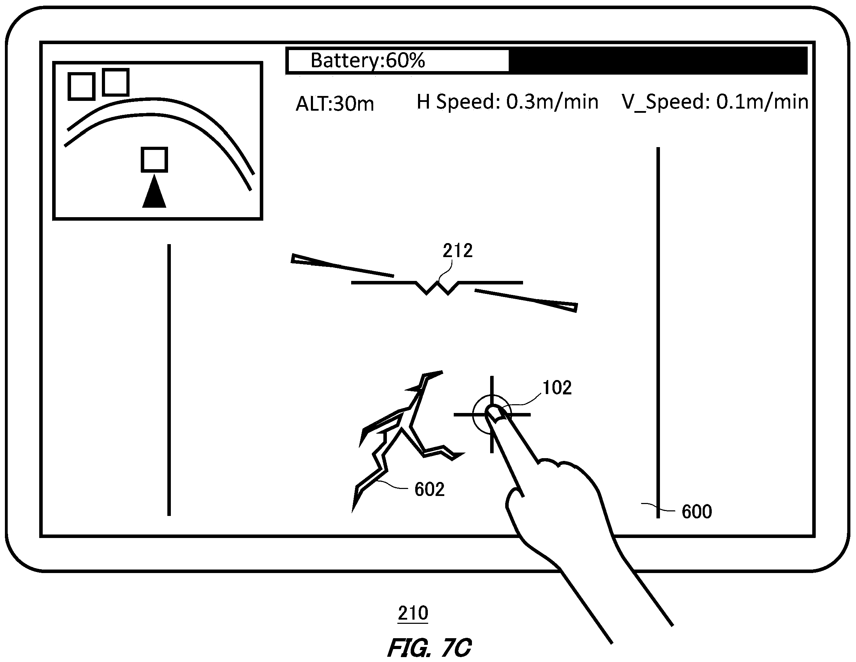

Fig. 7C illustrates one example of the display screen of the display unit 210. The display unit 210 of this example includes a touch panel allowing the user to operate by fingers. The user operates the display unit 210, and aligns the target landing position 102 with the discharge target 602. The user of this example drags the target landing position 102 to align the aiming with the discharge target 602. In this way, the discharge unit 50 can discharge the contents to the discharge target 602. Note that by tapping the discharge target 602, the aiming may be automatically aligned with the discharge target 602. The discharge direction control unit 78 may perform the posture control of the vehicle, or may perform the posture control of the nozzle 54.

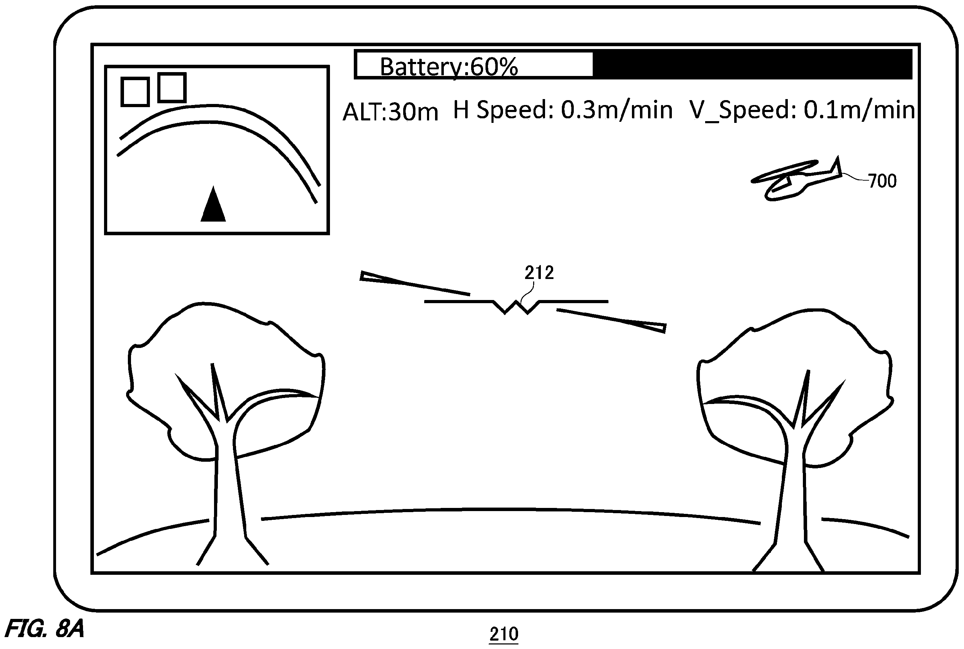

Fig. 8A illustrates one example of the display screen of the display unit 210. The display unit 210 of this example displays the periphery footage of the unmanned aerial vehicle 100 captured by the fixed camera 12. The fixed camera 12 of this example captures the advancing direction of the unmanned aerial vehicle 100. The periphery situations of the unmanned aerial vehicle 100 can be grasped by the display unit 210. For example, the display unit 210 shows a flying object 700, which is a helicopter and the operator can pay attention to the peripheral approaching object. The unmanned aerial vehicle 100 may control the flight path automatically based on the footage projected on the display unit 210, or may be manually maneuvered by the user.

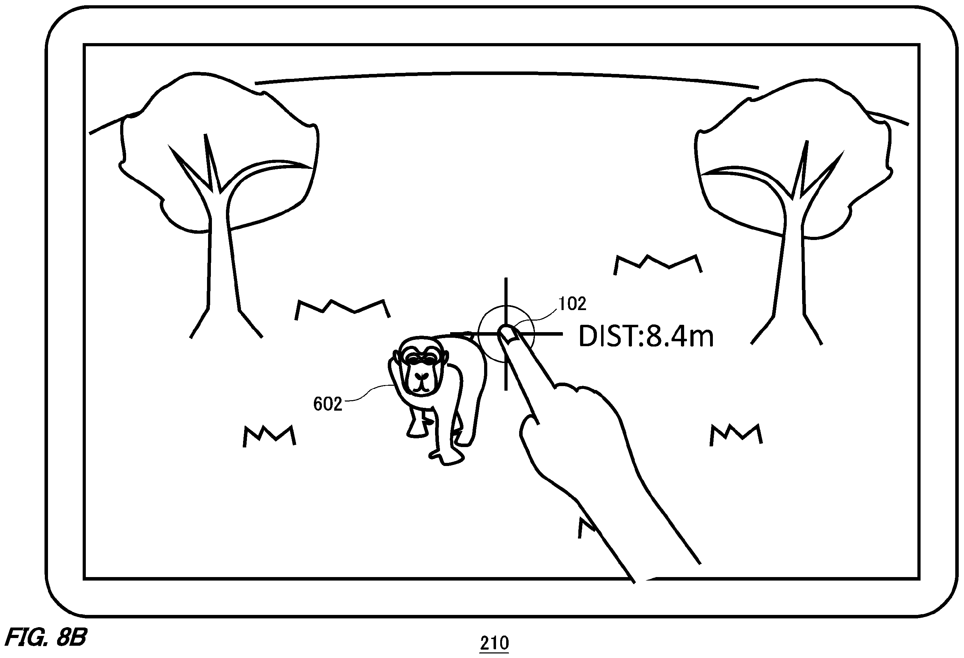

Fig.8B illustrates one example of the display screen of the display unit 210. The display unit 210 of this example displays the footage in the discharge direction of the discharge unit 50 captured by the movable camera 30. The movable camera 30 can aim while seeking out the discharge target. The discharge unit 50 is controlled so that the target landing position 102 can be aligned with any position in the capture range of the movable camera 30. For example, the discharge unit 50 controls the target landing position 102 to face the monkey when the monkey, the discharge target 602, is tapped. The display unit 210 may display the distance from the vehicle to the target landing position 102.

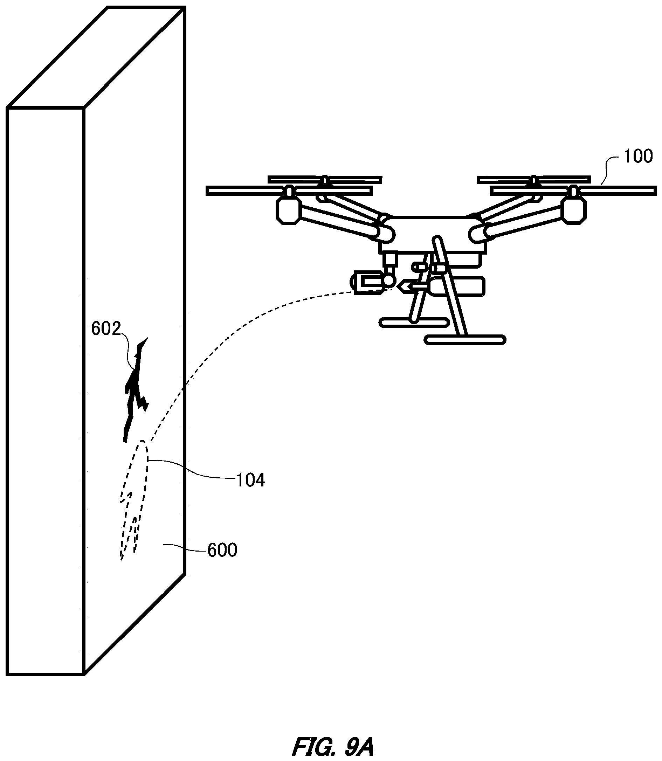

Fig. 9A illustrates one example of the unmanned aerial vehicle 100 discharging the contents. The unmanned aerial vehicle 100 shows the estimated landing position 104 when discharging the contents toward the discharge target 602 of the object 600. However, the estimated landing position 104 is located under the discharge target 602. The unmanned aerial vehicle 100 of this example controls the discharge based on the estimated landing position 104 before the actual discharge, so unnecessary discharge can be reduced.

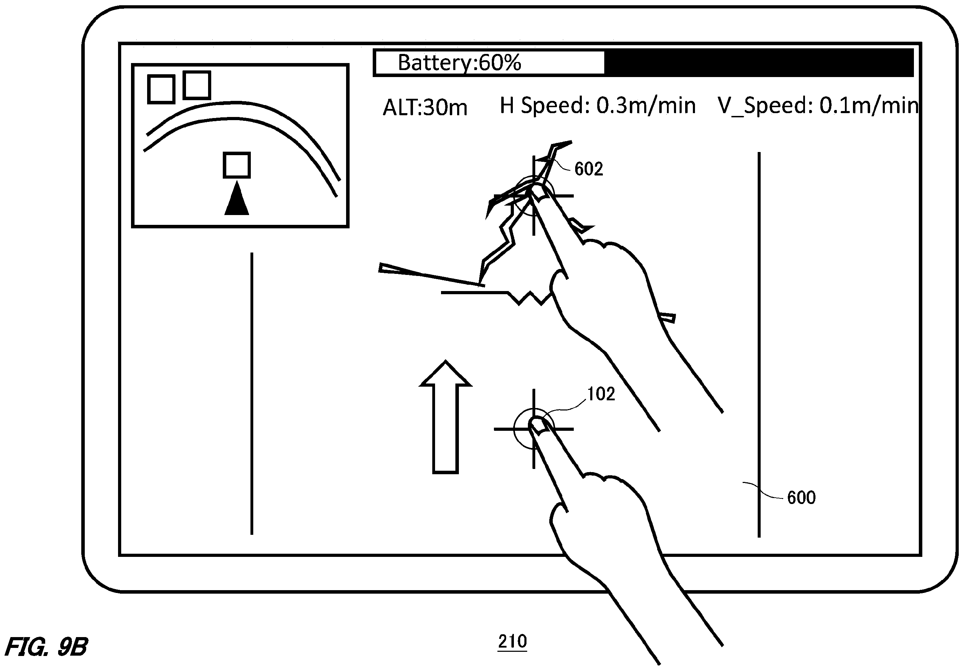

Fig. 9B illustrates one example of the discharge control method according to the operations of the display unit 210. The user drags the target landing position 102 toward the discharge target 602 so as to align the target landing position 102 with the discharge target 602. Also, by tapping the discharge target 602, the target landing position 102 may be aligned with the discharge target 602.

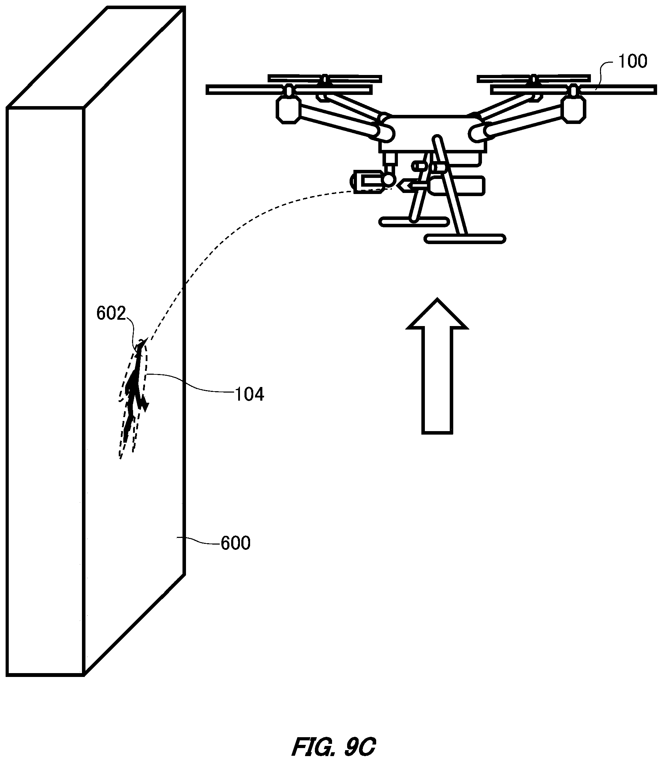

Fig. 9C illustrates one example of the posture controlled unmanned aerial vehicle 100. The unmanned aerial vehicle 100 controls the posture of the vehicle by aligning the aiming of the target landing position 102 with the discharge target 602. That is, the discharge direction control unit 78 controls the discharge direction of the discharge unit 50 by controlling the posture of the vehicle of the unmanned aerial vehicle 100. The discharge direction control unit 78 of this example raises the vehicle of the unmanned aerial vehicle 100 so that the estimated landing position 104 matches the discharge target 602.

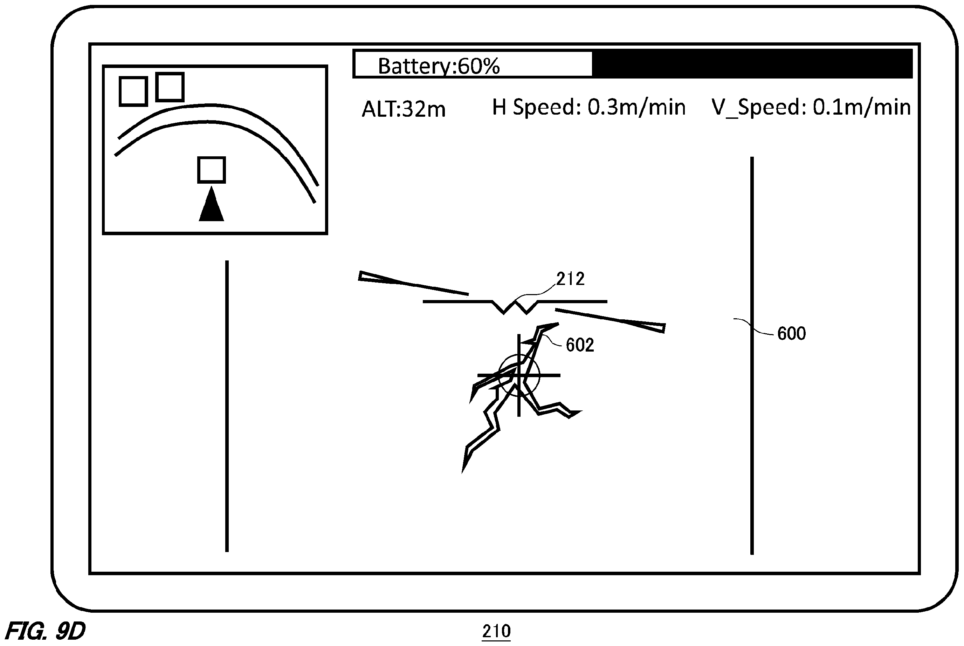

Fig. 9D illustrates one example of the display screen of the display unit 210 after posture control. The unmanned aerial vehicle 100 aligns the aiming of the target landing position 102 at the discharge target 602 by controlling the posture by the discharge direction control unit 78. In this way, the contents are discharged to the discharge target 602. Note that the discharge direction control unit 78 may perform control on the posture of the nozzle 54 in addition to the control on the posture of the vehicle.

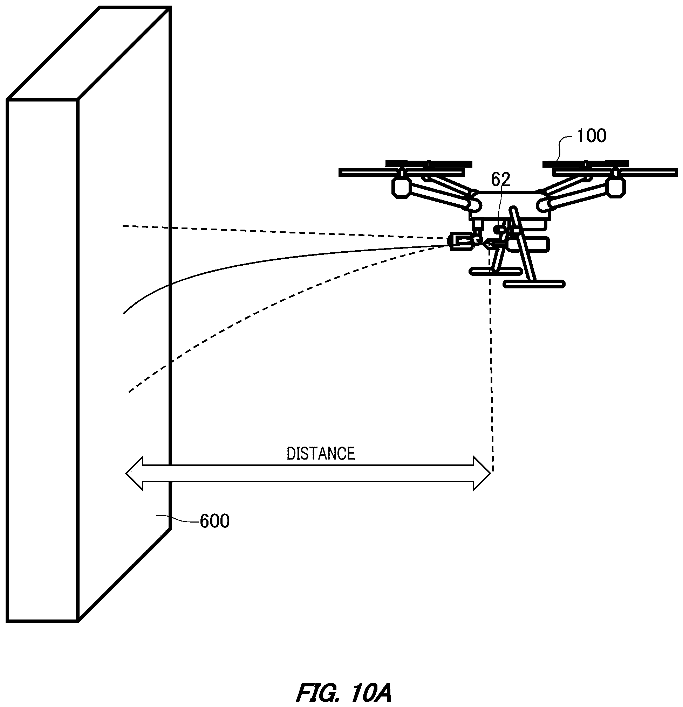

Fig. 10A illustrates one example of the unmanned aerial vehicle 100 discharging the contents. The unmanned aerial vehicle 100 of this example includes a range sensor 62. The unmanned aerial vehicle 100 corrects the target landing position 102 according to the distance from the discharge target 602.

The range sensor 62 acquires the distance between the discharge outlet 51 and the target landing position 102. The range sensor 62 is one example of the information acquiring unit 60. For example, the unmanned aerial vehicle 100 measures the distance between the range sensor 62 and the object 600. Also, the unmanned aerial vehicle 100 may calculate the distance between the discharge outlet 51 and the object 600 using the range sensor 62.

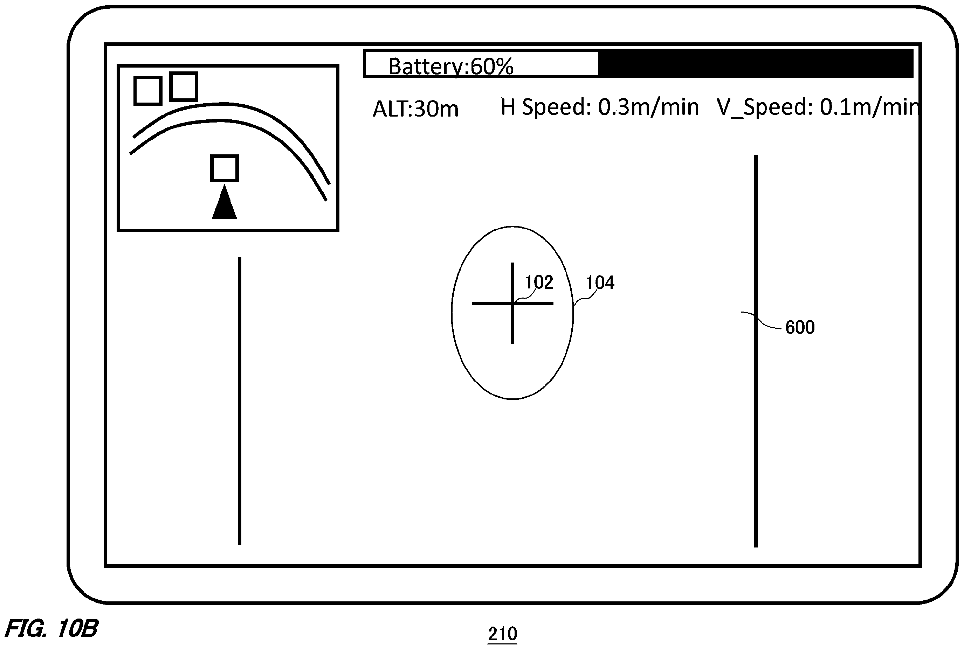

Fig. 10B illustrates one example of the display unit 210 corresponding to the unmanned aerial vehicle 100 shown in Fig. 10A. The target landing position 102 is indicated by the intersection point of a cross. The diffusion range is shown as the estimated landing position 104 in the periphery of the target landing position 102. The correction unit 74 of this example provides the correction amount according to the distance acquired by the information acquiring unit 60. For example, the correction unit 74 acquires diffusion range of the contents according to the distance as pre-data and corrects the diffusion range. This can improve the accuracy rate on the discharge target 602 even when the distance to the object 600 is far.

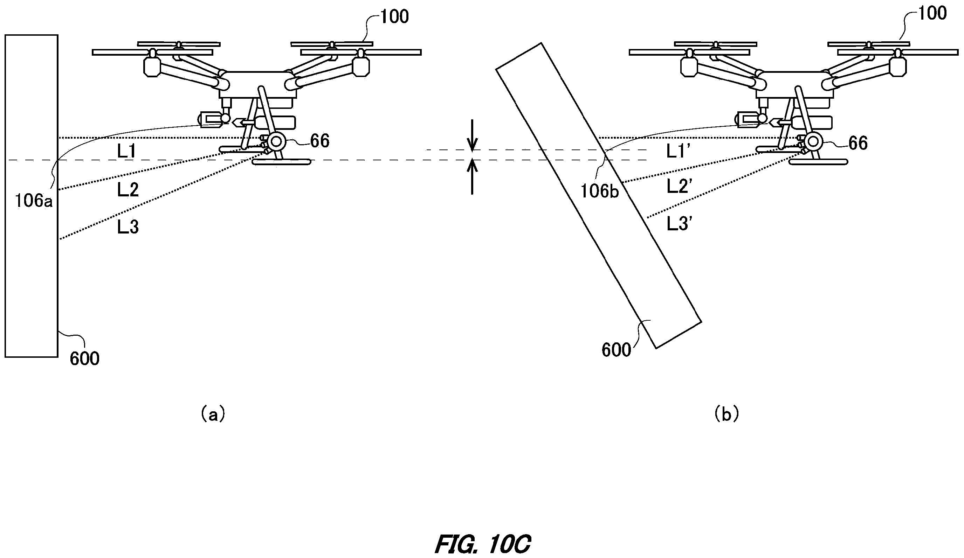

Fig. 10C illustrates one example of the unmanned aerial vehicle 100 discharging the contents. The unmanned aerial vehicle 100 of this example includes a shape acquisition unit 66. The shape acquisition unit 66 is one example of the information acquiring unit 60.

The shape acquisition unit 66 acquires the shape of the object 600. The shape of the object 600 may include the slope or unevenness of the object 600. The shape acquisition unit 66 includes a plurality of range sensors provided radially. The shape acquisition unit 66 of this example includes three range sensors to acquire the slope of the object 600.

The correction unit 74 provides the correction amount according to the shape of the object 600. For example, the correction unit 74 corrects the discharge direction of the contents according to the slope of the object 600. In this way, the unmanned aerial vehicle 100 can suppress the effect due to the shape of the object 600 to improve the accuracy rate toward the discharge target 602.

Fig. 10C(a) illustrates one example of the unmanned aerial vehicle 100 for discharging the contents when the object 600 is perpendicular. L1, L2 and L3 are respectively the distance between each range sensor and the object 600.

Fig. 10C (b) illustrates one example of the unmanned aerial vehicle 100 for discharging the contents when the object 600 is tilted. L1', L2' and L3' are respectively the distance between each range sensor and the object 600.

In this example, L1=L1' is used for explanation. Also, the object 600 is tilted and satisfies L2 > L2' and L3 > L3'. In this manner, if the object 600 is tilted and the contents are discharged with the same settings as when the object 600 is vertical, the landing position 106 is to be shifted. In this example, the landing position 106b when the object 600 is tilted is higher than the landing position 106a when the object 600 is vertical. The unmanned aerial vehicle 100 can suppress the error according to the slope of the object 600 and thereby improve the accuracy rate by adding the correction amount according to the shape of the object 600 by the shape acquisition unit 66.

The correction unit 74 may also acquire the diffusion range of the contents according to the shape as the pre-data to correct the diffusion range. In this way, the correction amount can be calculated with consideration of the diffuse of the contents in addition to the shape of the object 600, and unnecessary discharge can be reduced thereby. On the other hand, if the object 600 is located almost vertically downward, the accuracy rate can be further improved because the effect of diffusion due to gravity of the contents is reduced, different from horizontal discharge.

Note that the shape acquisition unit 66 is not limited to a plurality of range sensors, but can also be a LiDAR, which is a system that continuously fires a laser and densely measures the three-dimensional position of its reflection points, or a stereo camera, which may also record information on the depth direction of the object 600 by simultaneously capturing it from a plurality of different directions. The accuracy rate of the contents can also be improved even if the shape of the object 600 is not flat, but rounded or uneven like a sphere.

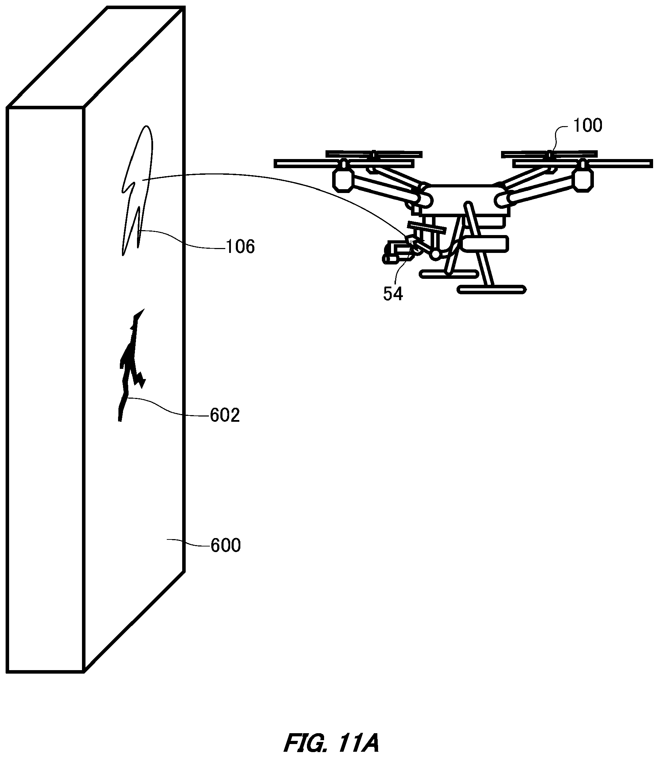

Fig. 11A illustrates one example of the unmanned aerial vehicle 100 discharging the contents. The unmanned aerial vehicle 100 discharges the contents toward the discharge target 602 of the object 600. However, the actual landing position 106 is located above the discharge target 602.

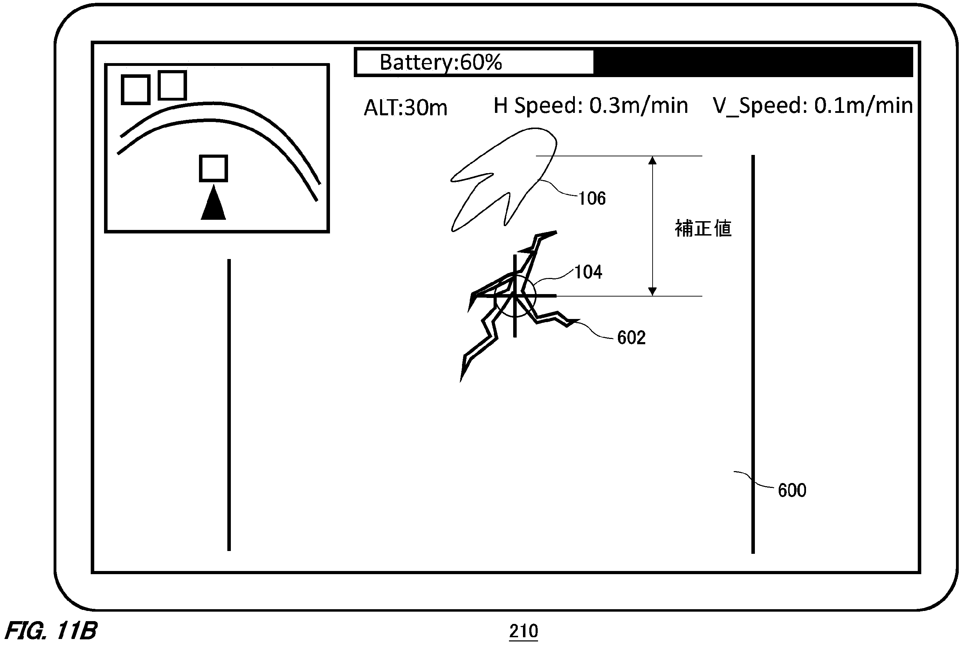

Fig. 11B illustrates one example of the correction method of the unmanned aerial vehicle 100. The unmanned aerial vehicle 100 of this example corrects the difference between the landing position 106 and the discharge target 602 by the correction unit 74.

The information acquiring unit 60 acquires the landing position 106 where the contents lands. In one example, the information acquiring unit 60 acquires the landing position 106 based on the image captured by the movable camera 30. The information acquiring unit 60 acquires the distance between the estimated landing position 104 aligned with the discharge target 602 and the actual landing position 106.

The correction unit 74 calculates the correction amount based on the estimated landing position 104 and the landing position 106. In one example, the correction unit 74 provides the correction amount according to the difference between the landing position 106 and the estimated landing position 104. The correction unit 74 controls the posture of the vehicle or the posture of the nozzle 54 with a larger correction amount the larger the difference between the landing position 106 and the estimated landing position 104.

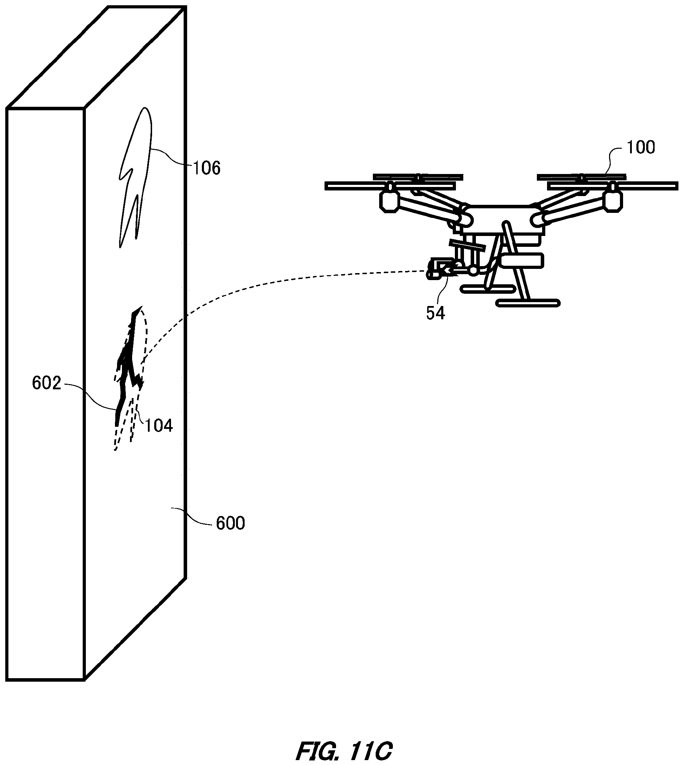

Fig. 11C illustrates one example of the unmanned aerial vehicle 100 discharging the contents after correction. The discharge direction control unit 78 controls the discharge direction according to the correction amount of the correction unit 74. The estimated landing position 104 is corrected by the correction unit 74 to be corrected lower than the landing position 106 before the correction. In this manner, the discharge direction control unit 78 controls the aiming of the estimated landing position 104 to align with the discharge target 602. The discharge direction control unit 78 of this example aligns the estimated landing position 104 with the discharge target 602 by laying down the posture of the nozzle 54 more than before the correction. Note that the discharge direction control unit 78 may also perform the control on the posture of the vehicle in addition to the control on the posture of the nozzle 54.

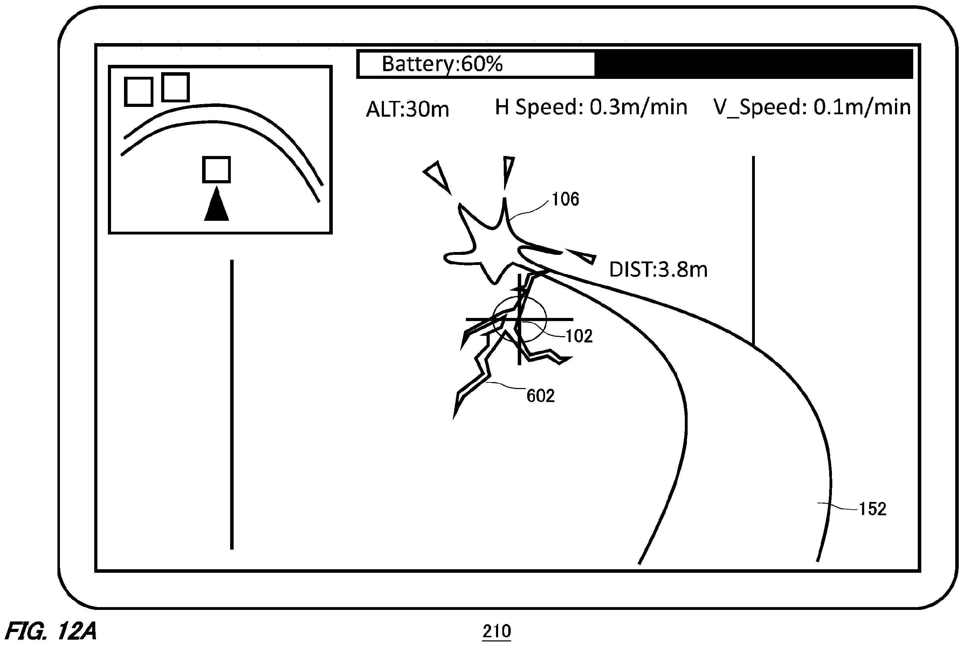

Fig. 12A illustrates one example of the discharge control method based on the locus 152. The display unit 210 of this example illustrates the locus 152 before the discharge control. The unmanned aerial vehicle 100 discharges the contents toward the discharge target 602. The unmanned aerial vehicle 100 of this example is discharging to the target landing position 102 aligned with the discharge target 602, but the landing position 106 is shifted above the discharge target 602. The information acquiring unit 60 acquires the locus 152 of the discharged contents. For example, the information acquiring unit 60 acquires the footage of the locus 152 from the movable camera 30. The correction unit 74 provides the correction amount according to the locus 152. The discharge direction control unit 78 controls the discharge direction from the discharge unit 50 according to the correction amount calculated by the correction unit 74.

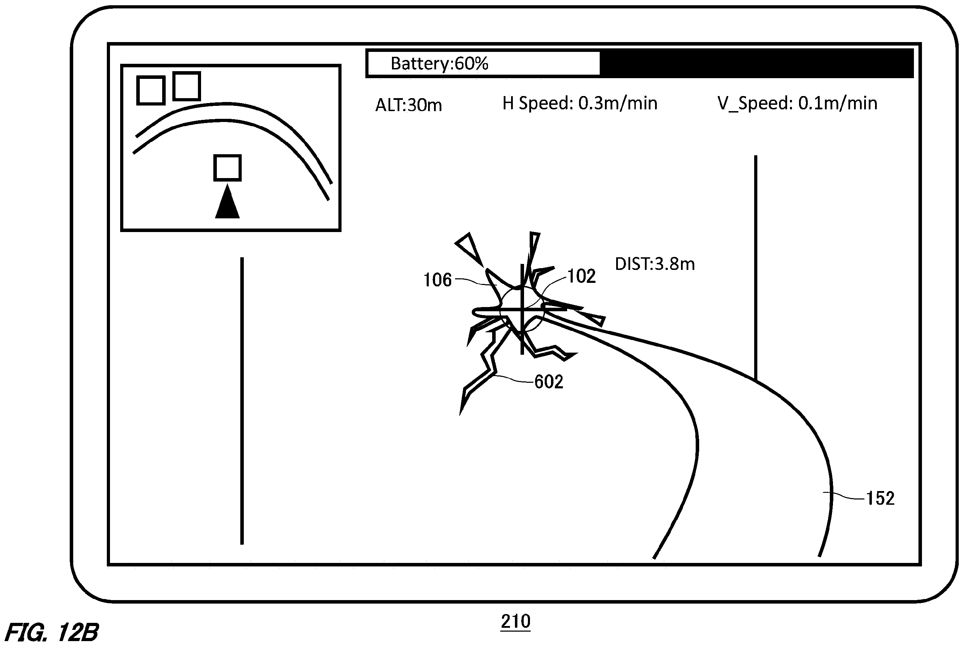

Fig. 12B illustrates one example of the discharge after correction using the locus 152. The display unit 210 of this example illustrates the locus 152 after the discharge control. The landing position 106 is corrected to match the discharge target 602 by controlling the discharge direction control unit 78. The unmanned aerial vehicle 100 of this example can be corrected during the actual discharge by using the locus 152 captured by the movable camera 30 for correction control. The discharge direction control unit 78 may control the discharge direction automatically so that the target landing position 102 lands on the discharge target 602. For example, it scans the water flow of the contents on the display unit 210 to confirm the difference between the target landing position 102 and the discharge target 602, and controls the discharge direction of the discharge unit 50. The user may also manually align the target landing position 102 with the discharge target 602 while watching the locus 152.

The unmanned aerial vehicle 100 of this example controls the discharge direction while confirming the locus 152 with footage captured by the fixed camera 12 or the movable camera 30. Therefore, the unmanned aerial vehicle 100 can improve the hitting probability toward the discharge target 602 by using the locus 152 to control the discharge direction. In addition, the unmanned aerial vehicle 100 only needs to include a camera, which can simplify the information acquiring unit 60.

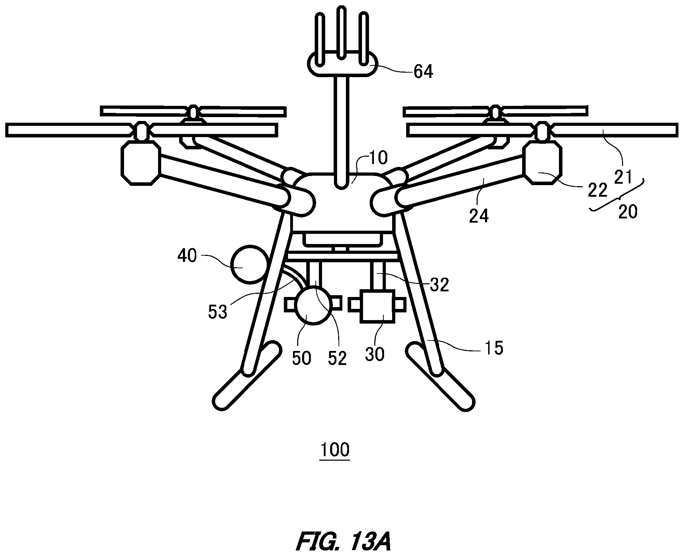

Fig. 13A illustrates one example of the configuration of the unmanned aerial vehicle 100. The unmanned aerial vehicle 100 of this example includes a wind power sensor 64.

The wind power sensor 64 detects the periphery wind direction and wind speed of the unmanned aerial vehicle 100. The wind power sensor 64 is one example of the information acquiring unit 60. For example, the wind power sensor 64 is an ultrasonic wind direction anemometer. The wind power sensor 64 of this example is attached to the upper portion of the body portion 10. The wind power sensor 64 may also be provided in a member other than the body portion 10, such as the leg portion 15. The wind power sensor 64 may acquire the airspeed when the unmanned aerial vehicle 100 is flying.

The correction unit 74 provides the correction amount based on the detection result of the wind power sensor 64. This makes it easier for the estimation unit 70 to land the contents on the discharge target 602, even when the wind speed is high. The unmanned aerial vehicle 100 may also prohibit the discharge according to the result of wind speed of the wind power sensor 64. For example, the correction unit 74 prohibits the discharge when the correction amount is higher than the predetermined value, and permits the discharge when it is lower than the predetermined value.

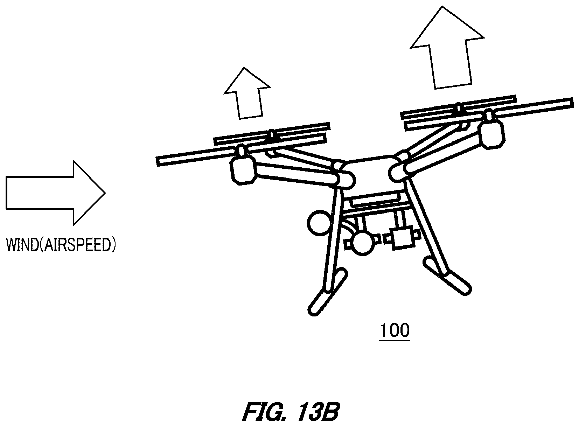

Fig. 13B illustrates one example of the flight control method of the unmanned aerial vehicle 100. The unmanned aerial vehicle 100 of this example controls the ground speed depending on the flight control according to the wind using the flight control unit 120.

The flight control unit 120 calculates the output values of the airspeed and the ground speed. The flight control unit 120 controls the flight of the unmanned aerial vehicle 100 to set the ground speed to zero. The flight control unit 120 increases the airspeed upwind in order to set the ground speed to zero, so that the airspeed is controlled to equal to the wind speed. By setting the ground speed to zero, the effect of wind on the vehicle posture is reduced. In one example, the unmanned aerial vehicle 100 acquires the ground speed using GPS.

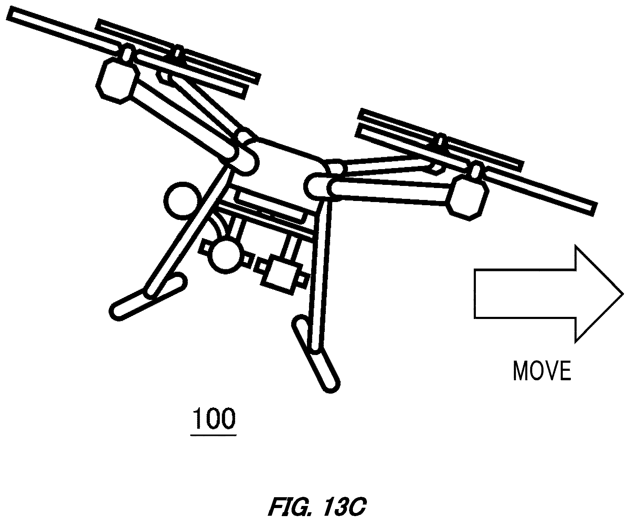

Fig. 13C illustrates one example of the flight control method of the unmanned aerial vehicle 100. The unmanned aerial vehicle 100 of this example controls the discharge while moving. When the ground speed of the unmanned aerial vehicle 100 is not zero, the discharge of the discharge unit 50 is affected by inertia. The flight control unit 120 outputs the calculated output value of the airspeed and the ground speed to the estimation unit 70. The correction unit 74 corrects the effect of the inertia with respect to the discharge based on the output value of the airspeed and the ground speed.

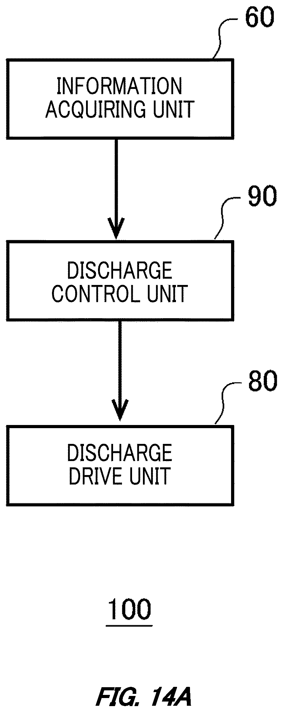

Fig. 14A illustrates one example of the block diagram showing the configuration of the unmanned aerial vehicle 100. The unmanned aerial vehicle 100 of this example includes a discharge control unit 90.

The discharge control unit 90 evaluates the risk about the self-contamination due to the contents discharge according to the information acquired by the information acquiring unit 60. The discharge control unit 90 controls the warning or prohibition of discharge, depending on the evaluation of the risk. The discharge control unit 90 warns of discharge by displaying a warning on the display unit 210. The discharge control unit 90 locks the drive of the discharge drive unit 80 when the discharge is prohibited. The discharge control unit 90 sends out warning information in response to warnings or prohibitions on the discharge.

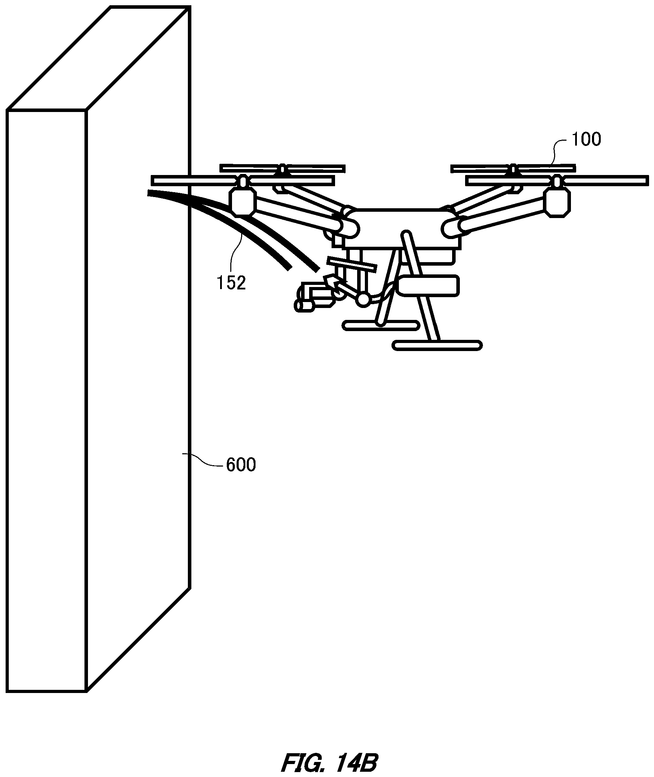

Fig. 14B illustrates one example of a state in which self-contamination of an unmanned aerial vehicle 100 is possible. The unmanned aerial vehicle 100 in this example is flying at a close distance to the object 600, a wall. The discharge control unit 90 in this example performs control according to the distance between the discharge outlet 51 and the target landing position 102. For example, the discharge control unit 90 displays a warning on the display unit 210 and prohibits discharge when the distance to the object 600 is close.

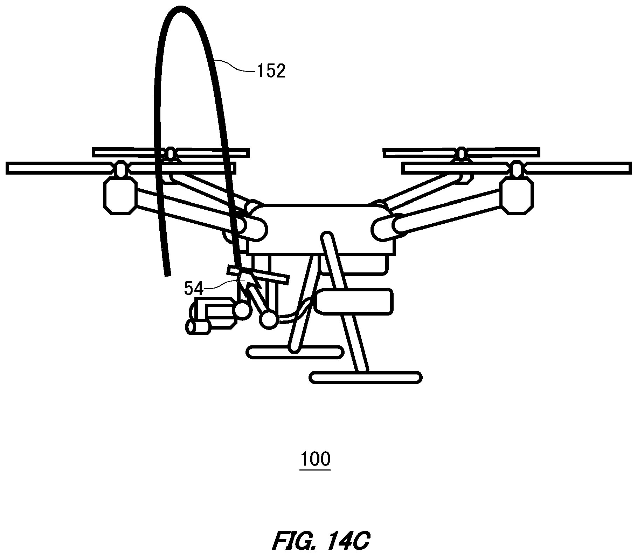

Fig. 14C illustrates a figure for describing one example of the control method of the discharge control unit 90. The discharge unit 50 includes a nozzle 54 for discharging the contents from the discharge outlet 51. The discharge control unit 90 performs the control according to the posture of the nozzle 54. For example, the discharge control unit 90 determines the possibility of self-contamination when the discharge outlet 51 is facing upward. The discharge control unit 90 may evaluate the possibility of self-contamination by predicting the locus 152 of the contents from the posture of the nozzle 54. In addition to the orientation of the discharge outlet 51, the discharge control unit 90 may evaluate the possibility of self-contamination based on the speed of the unmanned aerial vehicle 100. The discharge control unit 90 warns or prohibits discharge when there is a possibility that the direction of the discharge outlet 51 or the machine itself may be contaminated.

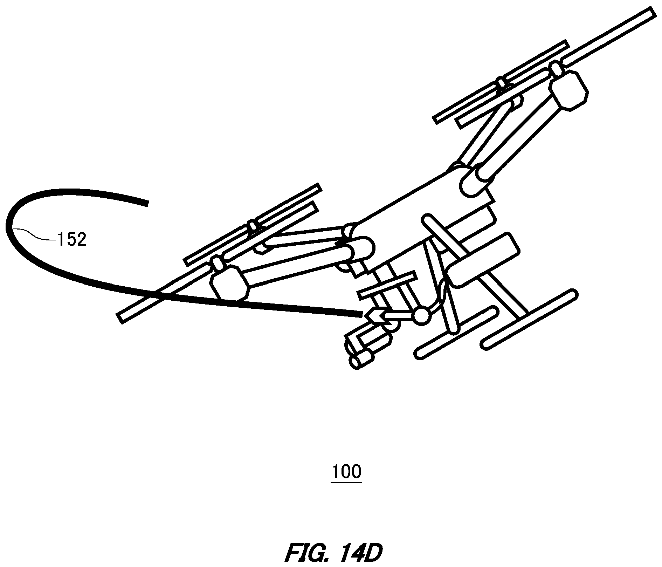

Fig. 14D illustrates a figure for describing one example of the control method of the discharge control unit 90. The discharge control unit 90 performs control according to at least one of the wind direction and the wind speed. For example, the discharge control unit 90 determines the possibility of the self-contamination and prohibits the discharge when the discharge outlet 51 fires from downwind to upwind. The discharge control unit 90 may also perform control based on the output values of the airspeed and ground speed of the unmanned aerial vehicle 100. In this case, the discharge control unit 90 also prohibits discharge when it determines that there is a possibility of self-contamination based on the output values of the airspeed and ground speed of the unmanned aerial vehicle 100. The discharge control unit 90 may permit discharge even when discharging upwind if there is no possibility of self-contamination from the output values of airspeed and ground speed.

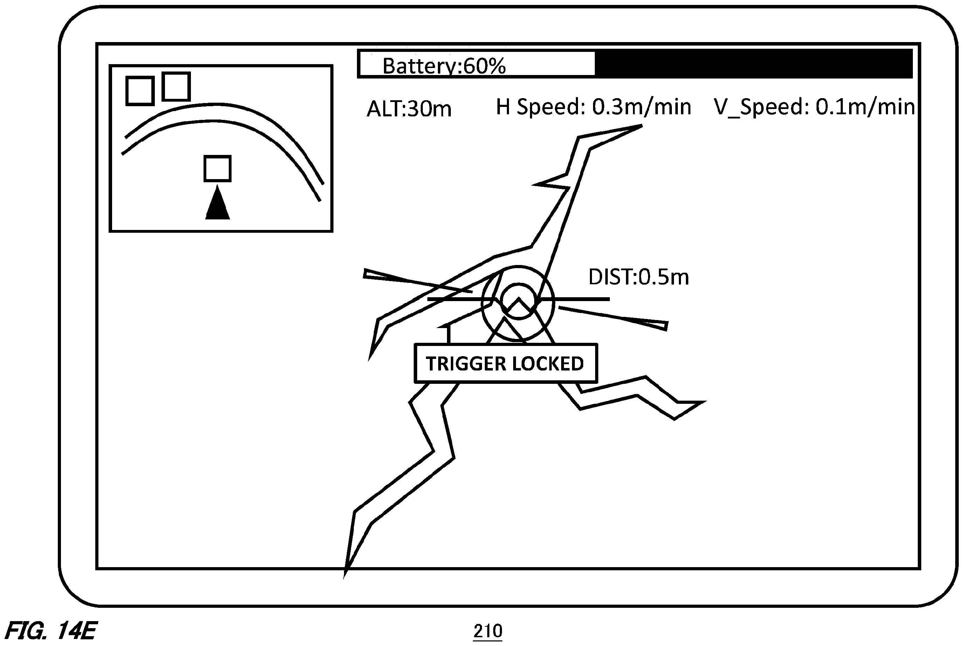

Fig. 14E illustrates one example of the display unit 210 when the discharge is prohibited. The display unit 210 of this example displays the warning or prohibition of the discharge to the user. The discharge control unit 90 locks the discharge when it is prohibited. When the discharge control unit 90 warns of discharge, it may not have to lock the discharge, although it warns of the risk of self-contamination from the display unit 210. In other words, even if a warning is displayed, it may be discharged at the determination of the user.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: body portion; 12: fixed camera; 15: leg portion; 20: propulsion unit; 21: rotary wing; 22: rotation drive unit; 24: arm portion; 30: movable camera; 32: coupling unit; 40: container holding unit; 41: body; 42: coupling unit; 43: first end cover unit; 44: second end cover unit; 45: screw unit; 50: discharge unit; 51: discharge outlet; 52: coupling unit; 53: extending portion; 54: nozzle: 60: information acquiring unit; 62: range sensor; 64: wind power sensor; 66: shape acquisition unit; 70: estimation unit; 72: main prediction unit; 74: correction unit; 75: aiming unit; 78: discharge direction control unit; 80: discharge drive unit; 81: cam; 82: cam follower; 83: movable plate; 90: discharge control unit; 100: unmanned aerial vehicle; 102: target landing position; 104: estimated landing position; 106: landing position; 110: communication unit; 120: flight control unit; 143: actuator; 145: stem; 150: container; 152: locus; 154: storage unit; 200: terminal device; 210: display unit; 212: center position; 220: controller; 300: maneuvering system; 600: object; 602: discharge target; 700: flying object

## Claims

1. An unmanned aerial vehicle capable of carrying an aerosol container, comprising:
a discharge unit with a discharge outlet for discharging contents of the aerosol container from the discharge outlet;
an information acquiring unit for acquiring predetermined information; and
an estimation unit for estimating an estimated landing position of the contents based on information obtained by the information acquiring unit.

2. The unmanned aerial vehicle according to claim 1, comprising:
a camera capable of capturing footage of a discharge range of the contents; and
a coupling unit that is coupled with the camera and is a posture control mechanism with rotational degrees of freedom to change a posture.

3. The unmanned aerial vehicle according to claim 2, comprising:
a communication unit for communicating with a monitor for confirming footage under capturing by the camera; wherein
the communication unit sends the estimated landing position estimated by the estimation unit.

4. The unmanned aerial vehicle according to any one of claims 1 to 3, comprising:
an aiming unit for determining a target landing position of the contents; and
a discharge direction control unit for controlling the direction of the discharge outlet so as to reduce the difference between the target landing position and the estimated landing position.

5. The unmanned aerial vehicle according to claim 4, wherein
the discharge direction control unit includes a posture control mechanism with rotational degrees of freedom to change posture of the discharge unit.

6. The unmanned aerial vehicle according to claim 4, wherein
the discharge direction control unit is configured to control posture of the unmanned aerial vehicle.

7. The unmanned aerial vehicle according to any one of claims 1 to 6, wherein
the estimation unit includes a correction unit for correcting the estimated landing position estimated by the estimation unit.

8. The unmanned aerial vehicle according to claim 7, wherein
the correction unit is configured to provide a correction amount according to a diffusion amount of the contents.

9. The unmanned aerial vehicle according to claim 7 or 8, wherein:
the information acquiring unit is configured to acquire a landing position where the contents landed; and
the correction unit is configured to provide a correction amount according to a difference between the landing position and the estimated landing position.

10. The unmanned aerial vehicle according to any one of claims 7 to 9, wherein:
the information acquiring unit is configured to acquire a locus of the discharged contents; and
the correction unit is configured to provide a correction amount according to a locus of the contents.

11. The unmanned aerial vehicle according to any one of claims 7 to 10, wherein:
the information acquiring unit includes a range sensor for acquiring a distance between the discharge outlet and a target landing position; and
the correction unit provides a correction amount according to the distance.

12. The unmanned aerial vehicle according to any one of claims 7 to 11, wherein:
the information acquiring unit includes a shape acquisition unit for acquiring a shape of an object to which the contents are discharged;
the correction unit is configured to provide a correction amount according to the shape.

13. The unmanned aerial vehicle according to any one of claims 7 to 12, wherein:
the information acquiring unit includes a wind power sensor for detecting wind direction and wind speed; and
the correction unit is configured to provide a correction amount based on a detection result of the wind power sensor.

14. The unmanned aerial vehicle according to any one of claims 7 to 13, comprising:
a flight control unit for controlling flight of the unmanned aerial vehicle; wherein
the correction unit provides a correction amount based on output values of airspeed and ground speed calculated by the flight control unit.

15. The unmanned aerial vehicle according to any one of claims 1 to 14, comprising
a discharge control unit for evaluating risk of self-contamination due to discharge of the contents and controlling a warning or prohibition of discharge according to information acquired by the information acquiring unit.

16. The unmanned aerial vehicle according to claim 15, wherein
the discharge control unit is configured to send out warning information according to a warning or prohibition of the discharge.

17. The unmanned aerial vehicle according to claim 15 or 16, wherein:
the discharge unit includes a nozzle for discharging the contents; and
the discharge control unit is configured to perform the control according to a posture of the nozzle.

18. The unmanned aerial vehicle according to any one of claims 15 to 17, wherein
the discharge control unit is configured to perform the control according to a distance between the discharge outlet and a target landing position.

19. The unmanned aerial vehicle according to any one of claims 15 to 18, wherein
the discharge control unit is configured to perform control based on output values of airspeed and ground speed of the unmanned aerial vehicle.

20. The unmanned aerial vehicle according to any one of claims 15 to 19, wherein
the discharge control unit is configured to perform the control according to at least one of wind direction and wind speed.

21. The unmanned aerial vehicle according to any one of claims 1 to 20, wherein
the estimation unit is configured to estimate the estimated landing position using trajectory data of the contents.

22. The unmanned aerial vehicle according to any one of claims 1 to 21, comprising a housing component for holding the aerosol container.
